# EUROPEAN PATENT SPECIFICATION

(11) **EP 0 339 800 B1**
(45) Date of publication and mention of the grant of the patent: **04.05.1994**
(21) Application number: 89303146.8
(22) Date of filing: 30.03.1989
(51) Int. Cl.: H01B 12/14, H01B 12/16

(54) **Electric cables**
Elektrische Kabel
Câbles électriques

(30) Priority: 01.04.1988 JP 82078/88
(43) Date of publication of application: 02.11.1989
(73) Proprietor: JUNKOSHA CO. LTD., Setagaya-ku Tokyo 156 (JP)
(72) Inventor: Hoshiko, Takeshi, Koganei-shi Tokyo (JP)
(74) Representative: Klunker . Schmitt-Nilson . Hirsch

(56) References cited:
- CH-A- 449 089
- DE-A- 2 113 597
- US-A- 3 527 873
- US-A- 4 508 934

## Description

This invention relates to superconducting cables such as comprising an insulated superconducting wire cooled by liquid nitrogen.

Methods for cooling superconducting materials include a method in which the superconducting material is formed into a braided wire having a structure similar to that of a coaxial cable, and the coolant is sealed inside the central hollow space of the superconducting material such as that disclosed in Japanese Laid-Open Utility Model Application 62-66118. Conventionally, however, it has been necessary to wrap the circumference of such a superconducting material with a large amount of copper in order to maintain stable superconduction of the wire material. As a result, a vicious cycle is created in which heat is generated by the resistance arising from faults in the crystalline arrangement of the super-conducting material and this heat leads to a further increase in resistance.

DE-A-21 13 597 discloses a low-temperature cable or superconductive cable, comprising a tubular conductor being embedded within a cellular plastic insulation such as polyurethane and this insulation is provided on its side adjacent to the superconductive conductor with a number of longitudinally extending cooling channels which are flowed through by a cooling medium such as liquid helium, particularly, this known cable is constructed of a series of concentric metal pipes separated by channeled cellular material which house the conductor made of a metal.

CH-A-449 089 shows a superconductive electric cable comprising a plurality of superconductive bands and a plurality of insulating strips arranged in an alternate stacked relation-ship forming a core group and a hollow duct surrounding the core group and having a cryogenic fluid circulating therein, furthermore, the insulating strips being oriented in said core group with respect to adjacent superconductive bands so that at least a portion of each band is exposed to the cryogenic fluid. In this known construction, each superconductive band can be enveloped in a packing made from a spongey material.

Furthermore, from the US-A-3 527 873 a composite superconducting cable is known which cable is comprised of a circular array of solid strands of superconducting wire embedded in a porous matrix that supports the strands within a solid conduit. This porous matrix is provided with a central passage through which supercritical or superfluid helium is circulated as a coolant. The matrix is further provided with small longitudinal channels formed in its periphery adjacent the conduit for venting gaseous helium to a low-pressure reservoir.

In accordance with the present invention, a superconducting electric cable is provided with the features as mentioned in Claim 1.

According to the invention, there is also provided a method of cooling a superconducting cable comprising the step of contacting the cable as defined in the appended claim 1 with a liquid coolant, which is preferably a liquified gaseous coolant such as nitrogen.

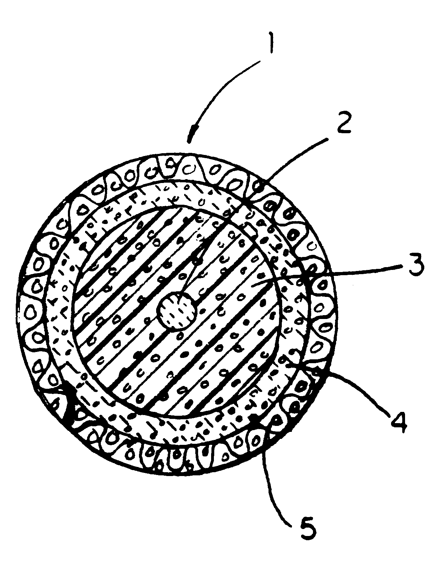

A superconducting electric cable embodying the invention will now be described by way of example only, with reference to the single Figure which is a cross-section through the cable.

In the superconducting cable to be described, the coolant directly contacts the superconducting material, thus absorbing heat generated by faults in the crystal structure and stabilizing the superconducting cable. More specifically, the superconducting cable is constructed by covering the circumference of a superconducting ceramic wire material, which can be penetrated by a coolant such as liquid nitrogen, with a continuously porous insulating material. Accordingly, the superconducting ceramic wire material is stably held by the continuously porous insulating material and at the same time the coolant permeates the continuously porous insulating material and directly contacts the superconducting ceramic wire material. As a result, the coolant penetrates into the crystalline structure of the superconductor so that any heat generated by faults in the crystalline arrangement of the ceramic material is effectively absorbed to give a stabilized superconducting cable.

With reference now to the Figure, a superconducting cable 1 is constructed as shown. A continuously porous insulating material 3 is formed by wrapping a drawn porous tape, such as polytetrafluoroethylene tape, around the circumference of a superconducting ceramic wire material 2, such as a YBa₂Cu₃Oₓ sinter. Next, an external conductive layer 4 is formed by wrapping a superconducting ceramic tape, which has openings formed in it at prescribed intervals, around the outside of porous insulating material 3. Finally, a protective layer 5, formed from woven high-strength tetrafluoroethylene polymer fibres, is placed on the outside of external conductive layer 4.

As a result of this method of construction, superconducting ceramic wire material 2 is firmly held by continuously porous insulating material 3, external conductive layer 4, and protective layer 5 so that it is structurally stable. Further, the liquid nitrogen coolant which surrounds superconducting cable 1 passes through the mesh of protective layer 5, the openings in external conductive layer 4, and continuously porous insulating material 3, and thus directly contacts superconducting ceramic wire material 2. Accordingly, this liquid nitrogen penetrates into the crystalline arrangement of the ceramic material so that any heat generated by faults in the crystalline structure of the ceramic material is effectively absorbed to yield a stabilized superconducting cable.

Other ceramic materials than that exemplified above may be used for wire 2 and the ceramic tape portion of layer 4, such as La-Sr-Cu-O or the like, other coolants than liquid nitrogen may be used, and porous materials 3 and protective layer 5 may be other porous or high-strength fibrous materials which will not be harmed by liquid nitrogen or another liquid coolant. However, porous polytetrafluoroethylene is the preferred material for those layers.

Other changes in materials and methods which would be obvious to those skilled in the art could be made without departing from the scope of the claims.

## Claims

1. A superconducting electric cable (1) comprising a superconducting conductor (2), a porous insulating material (3) covering the conductor (2), and an outer protective jacket (5), said insulating material (3) being permeable to a liquid coolant,
**characterized in that**
the conductor (2) is a ceramic wire and that a conductive porous ceramic tape (4) is provided which covers the insulating material (3), said jacket (5) being arranged coaxially and externally to the ceramic tape (4), said tape (4) and said jacket (5) being both permeable to the liquid coolant surrounding said cable (1) to thereby enable the liquid coolant to contact the ceramic material of the wire (2).

2. A cable according to claim 1, in which said outer protective jacket (5) comprises woven high strength fibres of tetrafluoroethylene.

3. A cable according to claim 2, in which said fibres comprise expanded porous polytetrafluoroethylene.

4. A method of cooling a superconducting cable comprising the step of contacting the cable of claim 1 with a liquid coolant.

5. A method according to claim 4, characterized in that said liquid coolant is a liquified gaseous coolant such as nitrogen.

## Patentansprüche

1. Supraleitendes elektrisches Kabel (1) mit einem supraleitenden Leiter (2), einem den Leiter (2) abdeckenden, porösen, isolierenden Material (3), und einem äußeren Schutzmantel (5), wobei das Isoliermaterial (3) für ein flüssiges Kühlmittel durchlässig ist, **dadurch gekennzeichnet,** daß der Leiter (2) ein keramischer Leiter ist und daß ein leitendes poröses keramisches Band (4) vorgesehen ist, welches das Isoliermaterial (3) abdeckt, wobei der Mantel (5) koaxial und außen bezüglich des keramischen Bandes (4) angeordnet ist, das Band (4) und der Mantel (5) beide für das das Kabel (1) umgebende flüssige Kühlmittel durchlässig sind, um dadurch dem flüssigen Kühlmittel zu ermöglichen, das keramische Material des Drahts (2) zu berühren.

2. Kabel nach Anspruch 1, bei dem der äußere Schutzmantel (5) verwobene hochfeste Fasern aus Tetrafluorethylen aufweist.

3. Kabel nach Anspruch 2, bei dem die Fasern expandiertes poröses Polytetrafluorethylen aufweisen.

4. Verfahren zum Kühlen eines supraleitenden Kabels, umfassend den Schritt des Kontaktierens des Kabels nach Anspruch 1 mit einem flüssigen Kühlmittel.

5. Verfahren nach Anspruch 4, **dadurch gekennzeichnet**, daß das flüssige Kühlmittel ein verflüssigtes gasförmiges Kühlmittel wie Stickstoff ist.

## Revendications

1. Câble électrique supraconducteur (1) comprenant un conducteur supraconducteur (2), un matériau isolant poreux (3) recouvrant le conducteur (2) et une enveloppe protectrice externe (5), ledit matériau isolant (3) étant perméable à un réfrigérant liquide,
caractérisé en ce que le conducteur (2) est un fil cérarmique et en ce qu'il est prévu une bande céramique poreuse conductrice (4) qui recouvre le matériau isolant (3), ladite enveloppe (5) étant disposée coaxialement à la bande céramique (4) et à l'extérieur de celle-ci, ladite bande (4) et ladite enveloppe (5) étant l'une et l'autre perméables au réfrigérant liquide qui entoure ledit câble (1) pour permettre ainsi au réfrigérant liquide d'entrer en contact avec le matériau céramique du fil (2).

2. Câble selon la revendication 1, dans lequel ladite enveloppe protectrice externe (5) comprend des fibres tissées à haute résistance mécanique à base de tétrafluoroéthylène.

3. Câble selon la revendication 2, dans lequel lesdites fibres comprennent du polytétrafluoroéthylène poreux expansé.

4. Procédé de refroidissement d'un câble supraconducteur, comprenant l'étape consistant à mettre le câble de la revendication 1 en contact avec un réfrigérant liquide.

5. Procédé selon la revendication 4, caractérisé en ce que ledit réfrigérant liquide est un réfrigérant gazeux liquéfié tel que l'azote.
